(19) Europäisches Patentamt / European Patent Office / Office européen des brevets

(11) **EP 4 231 743 A1**

(12) **EUROPEAN PATENT APPLICATION**
published in accordance with Art. 153(4) EPC

(43) Date of publication:
**23.08.2023 Bulletin 2023/34**

(21) Application number: **20957185.0**

(22) Date of filing: **15.10.2020**

(51) International Patent Classification (IPC):
**H04W 72/04** (2023.01)

(52) Cooperative Patent Classification (CPC):
**H04W 72/04;** Y02D 30/70

(86) International application number:
**PCT/CN2020/121332**

(87) International publication number:
**WO 2022/077407 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventors:
• **JIANG, Qinyan
Beijing 100027 (CN)**
• **ZHANG, Lei
Beijing 100027 (CN)**
• **CHEN, Zhe
Beijing 100027 (CN)**

(74) Representative: **Haseltine Lake Kempner LLP
Cheapside House
138 Cheapside
London EC2V 6BJ (GB)**

(54) **DATA RECEIVING METHOD AND APPARATUS**

(57) Embodiments of this disclosure provide a data reception method, a data transmission method and apparatuses thereof. The method data reception includes: receiving, by a terminal equipment, downlink control information (DCI) used for scheduling physical downlink shared channel(s) (PDSCHs), the DCI including a first information field used for indicating time-domain resources of at least two (M) first PDSCHs; and receiving at least one (N) second PDSCH by the terminal equipment.

201

The terminal equipment receives downlink control information (DCI) used for scheduling physical downlink shared channel(s) (PDSCHs), the DCI including a first information field used for indicating time domain resources of at least two (M) first PDSCHs

202

the terminal equipment receives at least one (N) second PDSCH

**Fig.2**

EP 4 231 743 A1

**Description**

Technical Field

This disclosure relates to the field of communications.

Background

A physical downlink shared channel (PDSCH) is a type of physical downlink channel in a wireless communication system, which is used to carry downlink data. The PDSCH may be scheduled via downlink control information (DCI). The DCI used to schedule the PDSCH at least includes information indicating resources of the PDSCH. In an existing New Radio (NR) system, a variety of DCI formats for scheduling a PDSCH are defined, such as DCI format 1_0, DCI format 1_1 and DCI format 1_2, and specific information and/or sizes of DCI in different DCI formats is/are different, so as to meet different scheduling demands.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary of the Disclosure

In an existing NR system, one piece of DCI is only able to schedule one PDSCH. It was found by the inventors that in some cases, for a terminal equipment, such a scheduling mode may have a problem of high monitoring burden of the DCI (PDCCH), resulting in high equipment complexity and power consumption.

For example, how to support an NR system to work at higher frequencies (above 52.6 GHz) is currently under study, and data transmission at higher frequencies faces more serious phase noises and other problems. Therefore, in order to overcome phase noise and other problems, it is possibly needed to adopt larger subcarrier spacings (e.g. 240 kHz, 480 kHz, and 960kHz) to support data transmission at higher frequencies, while the larger subcarrier spacings mean shorter symbol lengths. If the existing frame structure design of NR is followed (in which one slot includes 14 symbols), a larger subcarrier interval means a shorter slot length. On the other hand, if the above scheduling mode is used to support that a terminal equipment (UE) is able to receive at least one PDSCH at each slot, the LTE is needed to monitor DCI at each slot. In this way, when the above larger subcarrier intervals are adopted, the number of times of monitoring the DCI per unit time by the UE increases due to the shorter slot length. In other words, a burden of the UE in monitoring the DCI is increased, and the implementation complexity and power consumption of the UE is also increased accordingly.

Addressed to at least one of the above problems, embodiments of this disclosure provide a data reception method and apparatus.

According to an aspect of the embodiments of this disclosure, there is provided a data reception apparatus, applicable to a terminal equipment, the apparatus including:

a first receiving unit configured to receive downlink control information (DCI) used for scheduling physical downlink shared channel(s) (PDSCHs), the DCI including a first information field used for indicating time domain resources of at least two (M) first PDSCHs; and
a second receiving unit configured to receive at least one (N) second PDSCH.

According to another aspect of the embodiments of this disclosure, there is provided a data transmission apparatus, applicable to a network device, the apparatus including:

a third transmitting unit configured to transmit downlink control information (DCI) used for scheduling physical downlink shared channel(s) (PDSCHs) to a terminal equipment, the DCI including a first information field used for indicating time domain resources of at least two (M) first PDSCHs; and
a fourth transmitting unit configured to transmit at least one (N) second PDSCH to the terminal equipment.

An advantage of the embodiments of this disclosure exists in that multiple PDSCHs may be scheduled by one piece of DCI, thereby easing the burden of monitoring the DCI of the terminal equipment, and lowering power consumption and complexity.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

FIG. 1 is schematic diagram of a communication system of an embodiment of this disclosure;
FIG. 2 is a schematic diagram of the data reception method of an embodiment of this disclosure;
FIGs. 3A-3C are schematic diagrams of at least two (M) first PDSCH time-domain positions of the embodiment of this disclosure;
FIGs. 4A and 4B are schematic diagrams of at least two (M) first PDSCH time-domain positions of the embodiment of this disclosure;
FIGs. 5A-5G are schematic diagrams of at least one (N) second PDSCH time-domain position of the embodiment of this disclosure;
FIG. 6A is a schematic diagram of an HARQ process identifier of at least one (N) second PDSCH of the embodiment of this disclosure;
FIG. 6B is a schematic diagram of an HARQ process identifier of at least two (M) first PDSCHs of the embodiment of this disclosure;
FIGs. 7A-7F are schematic diagrams of HARQ-ACK feedback slots of the embodiment of this disclosure;
FIG. 8 is a schematic diagram of the data transmission method of an embodiment of this disclosure;
FIG. 9 is a schematic diagram of the data reception apparatus of an embodiment of this disclosure;
FIG. 10 is a schematic diagram of the data transmission apparatus of an embodiment of this disclosure;
FIG. 11 is a schematic diagram of the network device of an embodiment of this disclosure; and
FIG. 12 is a schematic diagram of the terminal equipment of an embodiment of this disclosure.

Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of' or "a type of' in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, and/or other communication protocols that are currently known or will be developed in the future.

In the embodiments of this disclosure, the term "network device", for example, refers to a device in a communication system that accesses a terminal equipment to the communication network and provides services for the terminal equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC).

The base station may include but not limited to a node B (NodeB or NB), an evolved node B (eNodeB or eNB), and a 5G base station (gNB). Furthermore, it may include a remote radio head (RRH), a remote radio unit (RRU), a relay, or a low-power node (such as a femto, and a pico). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal equipment" refers to, for example, an equipment accessing to a communication network via the network device and receiving network services. The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal.

Moreover, the term "network side" or "network device side" refers to a side of a network, which may be a base station, and may include one or more network devices described above. The term "user side" or "terminal side" or "terminal equipment side" refers to a side of a user or a terminal, which may be a LTE, and may include one or more terminal equipments described above. In this text, "a device" may refer to a network device, or may refer to a terminal equipment.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information (e.g. UCI) carried by the PUCCH, transmitting or receiving a PRACH may be understood as transmitting or receiving a preamble carried by the PRACH, transmitting or receiving a PDSCH may be understood as transmitting or receiving downlink information data carried by the PDSCH, and transmitting or receiving a PDCCH may be understood as transmitting or receiving downlink information (e.g. DCI) carried by the PDCCH.

In the embodiment of this disclosure, higher-layer signaling may be, for example, radio resource control (RRC) signaling, such as being referred to as an RRC message, and including a master information block (MIB), system information, and a dedicated RRC message; or being referred to as an RRC information element (RRC IE). The higher-layer signaling may also be, for example, media access control (MAC) signaling, or may be referred to as an MAC control element (MAC CE). However, this disclosure is not limited thereto.

Scenarios of the embodiments of this disclosure shall be described below by way of example; however, this disclosure is not limited thereto.

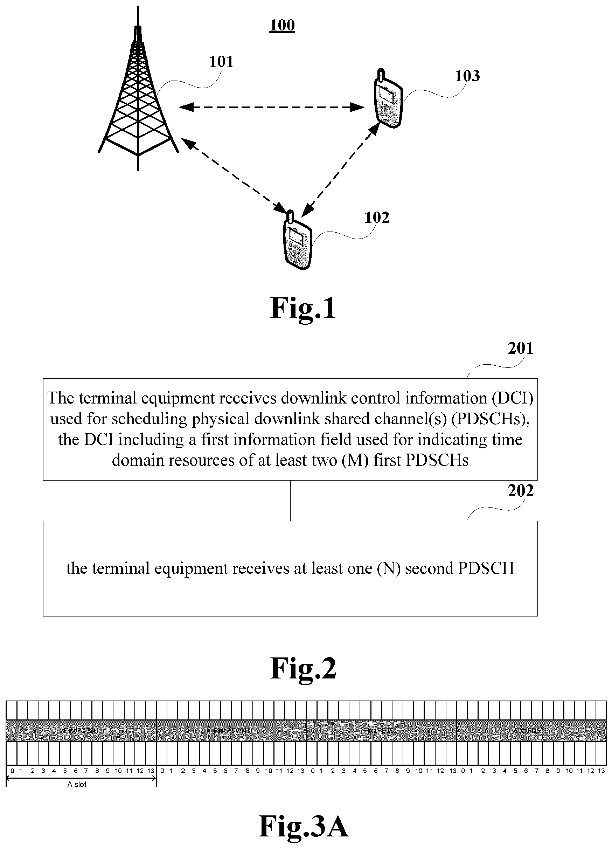

FIG. 1 is schematic diagram of a communication system of an embodiment of this disclosure, in which a case where terminal equipments and a network device are taken as examples is schematically shown. As shown in FIG. 1, a communication system 100 may include a network device 101 and terminal equipments 102, 103. For the sake of simplicity, an example having only two terminal equipments and one network device is schematically given in FIG. 1; however, the embodiment of this disclosure is not limited thereto.

In the embodiment of this disclosure, existing services or services that may be implemented in the future may be performed between the network device 101 and the terminal equipments 102, 103. For example, such services may include but not limited to an enhanced mobile broadband (eMBB), massive machine type communication (mMTC), ultra-reliable and low-latency communication (URLLC), and related communications of reduced capability terminal equipments.

It should be noted that FIG. 1 shows that the two terminal equipments 102 and 103 are both within the coverage of the network device 101; however, the embodiment of this disclosure is not limited thereto. The two terminal equipments 102 and 103 may not be within the coverage of network device 101, or one terminal equipment 102 may be within the coverage of network device 101, and the other terminal equipment 103 may be outside the coverage of network device 101.

In the embodiment of this disclosure, transport blocks (such as one or two transport blocks) carried by different PDSCHs are different. Therefore, "multiple PDSCHs" or "at least two PDSCHs" in the following refer to different PDSCHs carrying different transport blocks. More specifically, transport blocks carried by different PDSCHs correspond to different HARQ processes, wherein different HARQ processes have different HARQ process identifiers.

In an existing scheme, one piece of DCI is only able to schedule one PDSCH, and is unable to schedule multiple PDSCHs. In the embodiment of this disclosure, one piece of DCI is able to schedule multiple PDSCHs, wherein the PDSCHs carry different transport blocks (in a non-repetition manner), thereby easing the burden of monitoring the DCI of the terminal equipment, and lowering power consumption and complexity.

The description shall be given below with reference to various embodiments.

Embodiment of a first aspect

The embodiment of this disclosure provides a data reception method, which shall be described from a side of a terminal equipment.

FIG. 2 is a schematic diagram of the data reception method of the embodiment of this disclosure. As shown in FIG. 2, the method includes:

201: the terminal equipment receives downlink control information (DCI) used for scheduling physical downlink shared channel(s) (PDSCHs), the DCI including a first information field used for indicating time domain resources of at least two (M) first PDSCHs; and
202: the terminal equipment receives at least one (N) second PDSCH.

In some embodiments, a DCI format of the DCI used to schedule the PDSCH may be DCI format 1_0, DCI format 1_1, DCI format 1_2, or a new DCI format that is introduced additionally; however, the embodiment of this disclosure is not limited thereto.

In some embodiments, the DCI used for scheduling the PDSCHs may be scrambled by a cell radio network temporary identifier (C-RNTI), a coding and modulation scheme C-RNTI (MCS-C-RNTI), a configured scheduling RNTI (CS-RNTI), a temporary C-RNTI (TC-RNTI), a system information RNTI (SI-RNTI), a random access RNTI (RA-RNTI), an MsgB-RNTI, a paging RNTI (P-RNTI), or a new RNTI that is introduced additionally; however, the embodiment of this disclosure is not limited thereto.

In some embodiments, the first PDSCH is a PDSCH indicated by the DCI, which may also be referred to as an indicated PDSCH or a nominal PDSCH. Time-domain resources of the at least two (M) first PDSCHs (hereinafter referred to as M first PDSCHs, where, M is greater than or equal to 2) are contiguous or discontiguous, numbers of time-domain symbols of different first PDSCHs are identical or different, and time-domain resources of each first PDSCH are in one slot or not in one slot; however, the embodiment of this disclosure is not limited thereto.

In some embodiments, the network device side may configure a time-domain relationship list (or referred to as a PDSCH time-domain resource allocation list) of PDSCH and PDCCH via higher-layer signaling. For example, the network device transmits an RRC message, which includes first configuration information, the first configuration information including at least one first information element, wherein one first information element is used to configure a time-domain relationship between PDSCHs and PDCCHs. For example, the first configuration information is PDSCH-TimeDomainResourceAllocationList, the first information element is PDSCH-TimeDomainResourceAllocation, and the first configuration information is, for example, included in pdsch-ConfigCommon or pdsch-Config.

In some embodiments, the DCI includes a first information field for indicating the time-domain resources of the at least two (M) first PDSCHs. The first information field is, for example, a time-domain resource assignment field, and contains a fifth number (E) of bits. The fifth number may be configured or predefined; however, the embodiment of this disclosure is not limited thereto. A decimal value to the fifth number of bits correspond is a value of the first information field. The value of the first information field may be used to indicate which first information element in the first configuration information is indicated by the DCI. For example, that the value of the first information field is 0 correspondingly indicates a first first information element in the first configuration information, and that the value of the first information field is 1 correspondingly indicates a second first information element in the first configuration information, and so on, which shall not be enumerated herein any further.

How to determine the indicated at least two (M) first PDSCHs according to the first information field and the first configuration information shall be further described below.

In some embodiments, in the case where the first information field is used to indicate the time-domain resources of the at least two (M) first PDSCHs, the value of the first information field corresponds to one first information element, which is used to configure a time-domain relationship between the M first PDSCHs and PDCCH carrying the DCI.

In some embodiments, the first information element may include a fourth number (D) of pieces of information (e.g. nrOfSlots), fourth number representing the number of slots to the first information elements correspond. The value of the first information field corresponds to one first information element, and the one first information element is used to configure a time-domain relationship between M first PDSCHs and the PDCCH carrying the DCI. And the fourth number D included in the one first information element is the above M.

In the above embodiment, the first information element includes information (e.g. k0) for configuring a slot offset (K0) between the PDSCH and PDCCH. For example, k0 indicates a slot offset between a starting time-domain position of the D first PDSCHs and the PDCCH, or a slot offset between a first PDSCH in the D first PDSCHs and the PDCCH. For example, assuming that the PDCCH used to carry the DCI is transmitted at a slot n, then the starting time-domain position of the D first PDSCHs is at a slot n+K0, or the first PDSCH in the D first PDSCHs is transmitted at the slot n+K0. Furthermore, the first information element may include information for configuring a PDSCH mapping type (e.g. mappingType) and/or information for configuring time-domain resources of the PDSCH (or symbols of the PDSCH, e.g. including a starting symbol and length (SLIV) of the PDSCH) (e.g. startSymbolAndLength). And identical PDSCH mapping type and starting symbol and length may be used to determine the D first PDSCH time-domain resources.

For example, marking a data format by the first configuration information by using an abstract syntax ASN.1 may be expressed as:

```
PDSCH-TimeDomainResourceAllocationList ::=   SEQUENCE
(SIZE(1..maxNrofDL-Allocations)) OF
PDSCH-TimeDomainResourceAllocation


PDSCH-TimeDomainResourceAllocation ::=   SEQUENCE {
   k0                                     INTEGER(0..32)
   mappingType                            ENUMERATED {typeA, typeB}
   startSymbolAndLength                   INTEGER (0..127)
   nrOfSlots                              INTEGER(1..8)
```

In some embodiments, the first information element may include information (e.g. nrOfPDSCHs) for configuring a first number (A), which represents the number of first PDSCHs to which the first information element corresponds. In a case where the first information field is used to indicate time-domain resources of at least two (M) first PDSCHs, a value of the first information field corresponds to one first information element. The one first information element is used to configure a time-domain relationship between the M first PDSCHs and the PDCCH carrying the DCI, and the first number A included in the one first information element is the above M.

In the above embodiment, the first information element includes information (e.g. k0) for configuring a slot offset (K0) between PDSCHs and PDCCHs. For example, k0 indicates a slot offset between a starting time-domain position of A first PDSCHs and the PDCCHs, or a slot offset between a first PDSCH in A first PDSCHs and the PDCCHs. For example, assuming that the PDCCH used to carry the DCI is transmitted at a slot n, then the starting time-domain position of the A first PDSCHs is at a slot n+K0, or the first PDSCH in the A first PDSCHs is transmitted at the slot n+K0. Furthermore, the first information element may include information for configuring a PDSCH mapping type (e.g. mappingType) and/or information for configuring time-domain resources the PDSCHs (or symbols of the PDSCHs, e.g. including starting symbol and length (SLIV) of the PDSCHs) (e.g. startSymbolAndLength). For example, marking a data format by the first configuration information by using an abstract syntax ASN.1 may be expressed as:

```
PDSCH-TimeDomainResourceAllocationList ::=   SEQUENCE
(SIZE(1..maxNrofDL-Allocations)) OF
PDSCH-TimeDomainResourceAllocation


PDSCH-TimeDomainResourceAllocation ::=   SEQUENCE {
    k0                                   INTEGER(0..32)
    mappingType                          ENUMERATED {typeA, typeB}
    startSymbolAndLength                 INTEGER (0..127)
    nrOfPDSCHs                         INTEGER(1..8)
```

where, SEQUENCE denotes an ordered set of corresponding information, SIZE denotes the number of elements in a corresponding SEQUENCE set, INTEGER ( ) and ENUMERATED ( ) denote a value type and value range of corresponding information. Reference may be made to ASN.1 syntax for details, which shall not be described herein any further.

In the above embodiment, identical PDSCH mapping type, starting symbol and length may be used to determine the A first PDSCH time-domain resources, or the PDSCH mapping type, starting symbol and length may be used to determine a first one of the first PDSCH time-domain resources in the A first PDSCHs, and time-domain resources of the remaining (A-1) first PDSCHs are identical to a time-domain resource of the first one of the first PDSCHs with respect to lengths and are sequentially mapped to contiguous symbols.

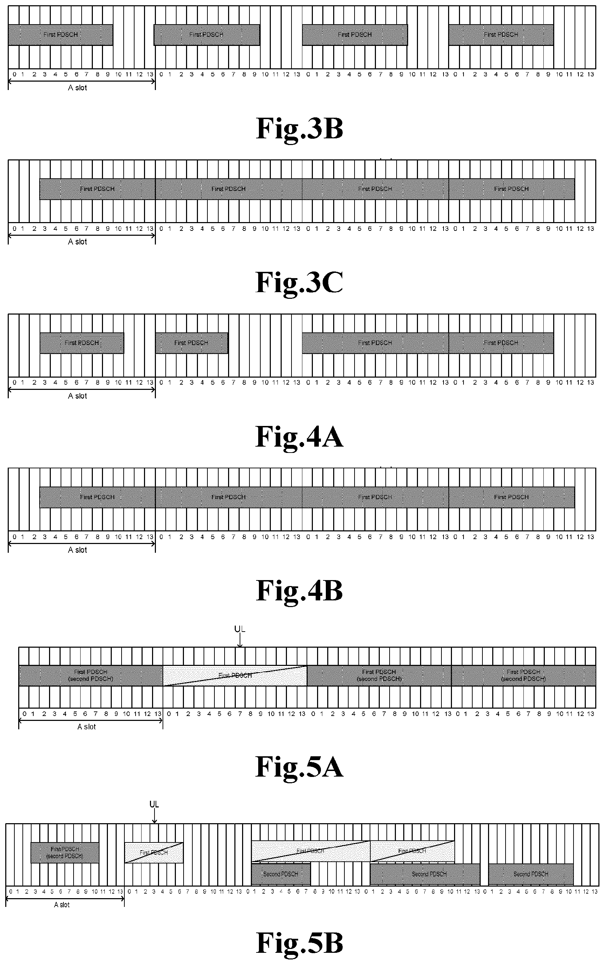

FIGs. 3A-3C are schematic diagrams of M (it is supposed in the figures that M=4) first PDSCH time-domain positions. As shown in FIG. 3A, M first PDSCHs apply identical PDSCH mapping type and starting symbol and length configurations; for example, time-domain lengths are identical and contiguous in a time domain, and furthermore, one first PDSCH time-domain resource is at one slot. As shown in FIG. 3B, M first PDSCHs apply identical PDSCH mapping types and starting symbol and length configurations; for example, time-domain lengths are identical and are discontiguous in the time domain, and furthermore, one first PDSCH time-domain resource is at a slot. As shown in FIG. 3C, a first one of the M first PDSCHs applies the PDSCH mapping type and the starting symbol and length configuration, and remaining first PDSCHs are identical to the first one of the first PDSCHs with respect to time-domain lengths and are sequentially mapped to contiguous symbols, that is, the M first PDSCHs have identical time-domain lengths and are contiguous in the time domain, but one of the first PDSCHs is at one slot or not at one slot.

In some embodiments, the first information element may include at least one second information element (e.g. PDSCH-Allocation or startSymbolAndLength) used to configure the time-domain resources of the PDSCHs (or symbols of the PDSCHs, e.g. including starting symbol and length (SLIV) of the PDSCHs), and numbers of second information elements included in each first information element are identical or different, in other words, the first information element may at most include second information elements of a number of a first predetermined value (e.g. maxNrofMultiplePDSCHs), the first predetermined value being predefined and greater than 1; and the second information element is used to configure a time-domain resource of one PDSCH. The value of the first information field corresponds to one first information element, and the one first information element is used to configure a time-domain relationship between the M first PDSCHs and the PDCCH carrying the DCI. That is, the one first information element includes at least two (M) second information elements, and each second information element is respectively used to configure time-domain resources of one first PDSCH.

In the above embodiment, the second information element includes a PDSCH mapping type (mappingType) and starting symbol and length configuration (startSymbolAndLength), that is, the time-domain resources of each first PDSCH are determined by their respective ( in the second information element corresponding thereto) PDSCH mapping type and starting symbol and length configuration. For example, marking a data format by the first configuration information by using an abstract syntax ASN.1 may be expressed as:

```
PDSCH-TimeDomainResourceAllocationList ::=  SEQUENCE
(SIZE(1..maxNrofDL-Allocations)) OF
PDSCH-TimeDomainResourceAllocation

PDSCH-TimeDomainResourceAllocation ::=  SEQUENCE {
    k0                                     INTEGER(0..32)
    pdschAllocationList                    SEQUENCE
(SIZE(1..maxNrofMultiplePDSCHs)) OF PDSCH-Allocation,
    ...
}
PDSCH-Allocation ::=  SEQUENCE {
    mappingType                          ENUMERATED {typeA, typeB}
    startSymbolAndLength                 INTEGER (0..127)
    ...
}
```

Or, the second information element includes starting symbol and length configuration (startSymbolAndLength), and the first information element includes PDSCH mapping type configuration (mappingType), that is, time-domain resources of each first PDSCH apply respective starting symbol and length configurations (in the second information element corresponding thereto) , but are determined by identical PDSCH mapping type configurations. For example, marking a data format by the first configuration information by using an abstract syntax ASN.1 may be expressed as:

```
PDSCH-TimeDomainResourceAllocationList ::=  SEQUENCE
(SIZE(1..maxNrofDL-Allocations)) OF
PDSCH-TimeDomainResourceAllocation

PDSCH-TimeDomainResourceAllocation ::=  SEQUENCE {
    k0                                   INTEGER(0..32)
    mappingType                          ENUMERATED {typeA, typeB}
    pdschAllocationList                  SEQUENCE
(SIZE(1..maxNrofMultiplePDSCHs)) OF PDSCH-Allocation,
    ...
}
PDSCH-Allocation ::=  SEQUENCE {
    startSymbolAndLength                 INTEGER (0..127)
    ...
}of
```

FIG. 4A to FIG. 4B are schematic diagrams of time-domain position of the M first PDSCHs. As shown in FIG. 4A, the time-domain resources of the M first PDSCHs are determined by their respective PDSCH mapping type configurations and starting symbol and length configurations. For example, the time-domain lengths may be identical or different, and may be contiguous or discontiguous in the time-domain, and furthermore time-domain resources of one first PDSCH are in one slot. As shown in FIG. 4B, the time-domain resources of the M first PDSCHs apply identical PDSCH mapping type configuration, but are determined by their respective starting symbol and length configurations. For example, the time-domain lengths may be identical or different, and are contiguous in the time-domain, and furthermore the time-domain resources of one first PDSCH are in one slot.

In some embodiments, the network device may also configure a slot offset value ($K_0$) between multiple PDSCHs and PDCCHs via higher-layer signaling, that is, the time-domain resources of the M first PDSCHs apply their respective ($K_0$) information to determine their respective slots. For example, the information on the slot offset ($K_0$) between the PDSCHs and the PDCCHs may be included in the second information element, and the time-domain resources of the M first PDSCHs apply their respective ($K_0$) information to determine their respective slots, which shall not be enumerated herein any further.

The above description is given by taking that the network device side configures the time-domain relationship list (or referred to as a PDSCH time-domain resource allocation list) of the PDSCHs and PDCCHs via higher-layer signaling as an example; however, the embodiment of this disclosure is not limited thereto. For example, time-domain resources of multiple PDSCHs may also be configured by predefining the time-domain relationship list of the PDSCHs and PDCCHs, and configuration of one row is similar to the configuration of the one first information element above, which shall not be described herein any further.

How to determine at least one (N) second PDSCH shall be further described below.

In some embodiments, the second PDSCH is an actually-scheduled PDSCH (e.g. a scheduled PDSCH, an actual PDSCH), and the first PDSCH is the second PDSCH, N=M, and N and M are greater than or equal to 2. In other words, an *M-th* first PDSCH indicated by DCI is an *N-th* actually-scheduled second PDSCH.

In some embodiments, the terminal equipment may determine the at least one (N) second PDSCH according to at least one piece of the following information: a semi-statically configured transmission direction (or, in other words, information for semi-statically configuring a transmission direction), a configured PRACH resource, information for dynamically scheduling uplink transmission or information for dynamically configuring a transmission direction, a configured invalid symbol, or whether it is cross-slot, which shall be described below separately.

In some embodiments, the semi-statically configuring means that a base station configures via cell-level/user-specific-level higher-layer signaling. The information used for semi-statically configuring the transmission direction is *tdd-UL-DL-ConfigurationCommon* or *tdd-UL-DL-ConfigurationDedicated,* and a transmission direction of a time unit (e.g. a symbol, a slot, a subframe) may be semi-statically configured as being uplink, downlink or flexible, wherein a time unit that is not explicitly configured as being uplink or downlink by the above information is a time unit that is configured as being flexible. When N second PDSCHs are determined according to the semi-statically configured transmission direction, when at least one symbol of the first PDSCH is semi-statically configured as being uplink (that is, it is unable to receive a downlink PDSCH), the first PDSCH is not taken as a second PDSCH, in other words, the terminal equipment does not receive the first PDSCH. For example, for a slot in multiple slots (assuming that there is one first PDSCH in one slot), if at least one symbol of the first PDSCH indicated by the DCI at the slot is semi-statically configured as being uplink, the terminal equipment does not receive the first PDSCH at the slot. FIG. 5A is a schematic diagram of at least one second PDSCH. As shown in FIG. 5A, it is supposed that one symbol of the first PDSCH at a second slot in the figure is semi-statically configured as being uplink and other symbols in the figure are not configured as being uplink, the first PDSCH is not taken as a second PDSCH.

Or, when at least one symbol of the first PDSCH is semi-statically configured as being uplink, the second PDSCH corresponds to the first PDSCH one by one (M=N), and the slot of the second PDSCH is identical or different from the slot of the first PDSCH corresponding thereto. For example, if one first PDSCH contains uplink symbols that are semi-statically configured, the one first PDSCH and first PDSCHs thereafter are extended in the time domain to a position of a nearest first PDSCH in the time domain that does not contain the symbol semi-statically configured as being uplink, and first PDSCHs that are not extended and the first PDSCHs that are extended are taken as at least one (N) second PDSCH. FIG. 5B is a schematic diagram of at least one second PDSCH. As shown in FIG. 5B, a first PDSCH at a second slot in the figure has a symbol semi-statically configured as being uplink, and other symbols in the figure are not configured as being uplink. A starting position of the first PDSCH is extended to a starting position of a first PDSCH at a next slot, first PDSCHs after the first PDSCH are extended in the same way, and the first PDSCH at the first slot and the first PDSCHs with adjusted time-domain positions are taken as at least one second PDSCH.

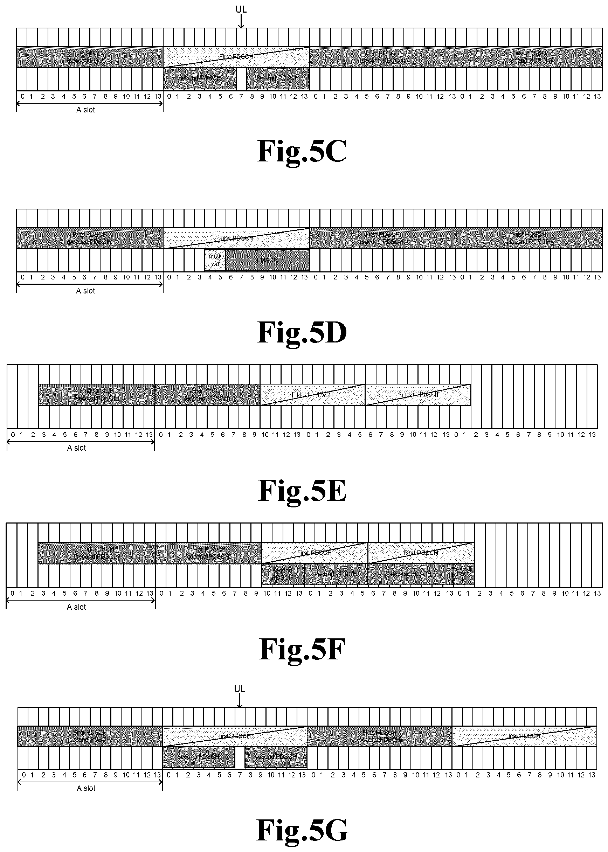

Or, when at least one symbol of the first PDSCH is semi-statically configured as being uplink, the first PDSCH is divided into at least two (O) third PDSCHs that do not contain the at least one uplink symbol, and the divided at least two third PDSCHs and a first PDSCH that do not contain the uplink symbol are taken as at least one (N) second PDSCH, that is, N=M-1+O. FIG. 5C is a schematic diagram of at least one second PDSCH. As shown in FIG. 5C, a first PDSCH at a second slot in the figure has a symbol that is semi-statically configured as being uplink, while other symbols in the figure are not configured as being uplink. The first PDSCH is divided into two third PDSCHs without uplink symbols, and the undivided first PDSCH and the two third PDSCHs are taken as at least one second PDSCH.

In some embodiments, when N second PDSCHs are determined according to a configured PRACH resource, when at least one symbol of the first PDSCH is configured with a PRACH and/or at least one symbol of the first PDSCH is a symbol in a third number (the third number is predefined, for example) (such as being referred to as an interval symbol) before the configured PRACH, the first PDSCH is not taken as the second PDSCH. FIG. 5D is a schematic diagram of the at least one second PDSCH. As shown in FIG. 5D, at least one symbol in the first PDSCH in a second slot in the figure is configured with a PRACH and at least one symbol of the first PDSCH is a symbol in the third number (the number is predefined, for example) (such as being referred to as an interval symbol) before the configured PRACH, the first PDSCH is not taken as the second PDSCH, in other words, the terminal equipment does not receive the first PDSCH.

In some embodiments, the transmission direction may be configured by the information for dynamically configuring a transmission direction as being uplink, downlink or flexible, wherein a time unit that is not explicitly configured as being uplink or downlink by the above information is a time unit that is configured as being flexible. When the N second PDSCHs are determined according to information for dynamically scheduling uplink transmission or the information for dynamically configuring a transmission direction information, and when at least one symbol in the first PDSCH is dynamically scheduled uplink transmission by the information or a transmission direction thereof is dynamically configured as being uplink by the information, the first PDSCH is not taken as the second PDSCH, in other words, the terminal equipment does not receive the first PDSCH; or, the second PDSCH corresponds to the first PDSCH one by one, and the slot of the second PDSCH is identical or different from the slot of the corresponding first PDSCH; or, the first PDSCH is divided into at least two third PDSCHs that do not contain the at least one uplink symbol, and the divided at least two third PDSCHs and the first PDSCH that does not contain the uplink symbol are taken as at least one (N) second PDSCH. For example, reference may be made to FIGs. 5A to 5C for the above implementations and implementations of the semi-static configuration, which shall not be described herein any further.

In the above embodiment, the information used for dynamically scheduling uplink transmission (such as DCI of DCI format 0_0 or DCI format 0_1 or DCI format 0_2) or the information used for dynamically configuring a transmission direction (such as DCI of DCI format 2_0) is transmitted before the DCI; otherwise, the UE does not determine the second PDSCH according to the information, or does not consider the information in determining at least one second PDSCH.

Or, in the above embodiment, the information used for dynamically scheduling uplink transmission (such as DCI of DCI format 0_0 or DCI format 0_1 or DCI format 0_2) or the information used for dynamically configuring a transmission direction (such as DCI of DCI format 2_0) is transmitted certain time before the DCI (for example, the certain time is predefined); otherwise, the UE does not determine the second PDSCH according to the information, or does not consider the information in determining at least one second PDSCH.

In some embodiments, when the time-domain resource of the first PDSCH is cross-slot (i.e. occupying two adjacent slots), the first PDSCH is not taken as the second PDSCH; in other words, the terminal equipment does not receive the first PDSCH. Or, the cross-slot first PDSCH is divided into at least two third PDSCHs that are not cross-slot (that is, within one slot), and the at least two divided third PDSCHs and the first PDSCH that is not cross-slot are taken as at least one (N) second PDSCH. FIG. 5E and FIG. 5F are schematic diagrams of at least one second PDSCH. As shown in FIG. 5E, the first PDSCH at a third and fourth slots is cross-slot, and the first PDSCH at the third and fourth slots is not taken as the second PDSCH. As shown in FIG. 5F, the first PDSCH at the third and fourth slots is cross-slot, and a PDSCH at the third slot may be divided into two third PDSCHs that are not cross-slot, and both the two divided third PDSCHs are not cross-slot.

In some embodiments, when at least one second PDSCH is determined according to the configured invalid symbol, and when at least one symbol of the first PDSCH is configured as being invalid (that is, it is unable to receive a downlink PDSCH), the first PDSCH is not taken as the second PDSCH, or the second PDSCH corresponds to the first PDSCH one by one (M=N), and the slot of the second PDSCH is identical or different from the slot of the corresponding first PDSCH; or, the first PDSCH is divided into at least two (O) third PDSCHs that do not contain the at least one invalid symbol, and the at least two divided third PDSCHs and the first PDSCH that does not contain the invalid symbol are taken as at least one (N) second PDSCH, that is, N=M-1+O. For example, reference may be made to FIGs. 5A to 5C for the above implementations and implementations of the semi-static configuration, which shall not be described herein any further.

In some embodiments, the terminal equipment may also determine an invalid symbol according to at least one piece of the following information: a semi-statically configured transmission direction (or information for semi-statically configuring a transmission direction), a configured PRACH resource, information for dynamically scheduling uplink transmission or information for dynamically configuring a transmission direction, or a configured invalid symbol. For example, the above semi-statically configured uplink symbol may be determined as an invalid symbol, and/or the symbol configured with the PRACH resource may be determined as an invalid symbol, and/or a symbol in the third number of symbols (the third number is predefined, for example) (such as being referred to as an interval symbol) before the PRACH may be determined as an invalid symbol, and/or a symbol of which uplink transmission is dynamically scheduled by the information used for dynamically scheduling uplink transmission may be determined as an invalid symbol, and/or a symbol that is configured by the information for dynamically configuring a transmission direction as being uplink may be determined as an invalid symbol, and/or a symbol configured as being invalid may be determined as an invalid symbol. If the first PDSCH contains a determined invalid symbol, the first PDSCH is not taken as the second PDSCH, or the second PDSCH corresponds to the first PDSCH one by one (M=N), and the slot of the second PDSCH is identical or different from the slot of the corresponding first PDSCH, or the first PDSCH is divided into at least two (O) third PDSCHs that do not contain the at least one invalid symbol, and the at least two divided third PDSCHs and the first PDSCH containing no invalid symbol are taken as at least one (N) second PDSCH, and particular implementations thereof are as described above, which shall not be repeated herein any further.

The above factors for determining at least one (N) second PDSCH or determining invalid symbols may be implemented separately or in a combined manner, and the embodiment of this disclosure is not limited thereto.

In some embodiments, the value of N does not exceed a maximum number of the first PDSCHs corresponding to the above first information elements, or the value of N does not exceed M. FIG. 5G is a schematic diagram of at least one second PDSCH. Assuming that the value of N does not exceed M, as shown in FIG. 5G, the number of M is 4, and the number N of the second PDSCHs is 4 at most, which are illustrative only, and the embodiment of this disclosure is not limited thereto.

Other information fields that the DCI may contain shall be further described below.

In some embodiments, the DCI further includes a second information field indicating an RV and/or a third information field indicating NDI. The second information field may be a redundancy version field, and the third information field may be a new data indicator field. A size/sizes of the second information field and/or the third information field is/are related to a second number, which is a maximum number of the first PDSCHs to which all the first information elements correspond, such as a maximum number of the second information elements included in all the first information elements in the first configuration information or the maximum number of the first number included in all the first information elements in the first configuration information. For example, bits of the second information field and/or the third information field correspond to the first PDSCHs. For example, an LSB of the third information field corresponds to a first one of the first PDSCHs, a second LSB corresponds to a second one of the first PDSCHs (in a case where the DCI indicates the second one of the first PDSCHs), and so on. For another example, the bits of the second information field and/or the third information field correspond to the second PDSCHs. For example, an LSB of the third information field corresponds to a first one of the second PDSCHs, and a second LSB corresponds to a second one of the second PDSCHs (in a case where the DCI actually schedules the second one of the second PDSCHs), and so on.

In some embodiments, the DCI may further include a fourth information field, which may be an HARQ process number field. The fourth information field is used to indicate a hybrid automatic repeat request (HARQ) process identifier (HARQ process ID). The HARQ process ID is an HARQ process ID of one of the at least two (M) first PDSCHs, or an HARQ process ID of one the at least one (N) second PDSCH, which shall be described below respectively.

In some embodiments, the HARQ process ID is the HARQ process ID of one of the at least one (N) second PDSCH, and the terminal equipment determines HARQ process IDs of other (N-1) second PDSCHs in a predefined method.

In the above embodiment, the one second PDSCH may be a first one of the N second PDSCHs. According to a scheduling order of the at least one second PDSCH, the HARQ process IDs are sequentially incremented by 1 or added by 1 and then performed modulo to determine the HARQ process IDs of the remaining (N-1) second PDSCHs. For example, the HARQ process ID indicated by the fourth information field is X (X is a value in 0~Y), X is the HARQ process ID of the first one of the at least one (N) second PDSCH, and an HARQ process ID of an *n-th* (n>1) second PDSCH is mod (X+n-1, $N_{\mathrm{HARQ}}^{\mathrm{DL}}$ ), where, $N_{\mathrm{HARQ}}^{\mathrm{DL}}$ is the number of HARQ processes of a corresponding serving cell, which is predefined, or configured by the base station via higher-layer signaling.

In the above embodiments, the method may further include (not shown, optional): a physical layer of the terminal equipment reports the HARQ information of the at least one (N) second PDSCH to a higher layer. The HARQ information includes the HARQ process ID of at least one (N) second PDSCH, and may further include an NDI or an RV or a transport block size (TBS).

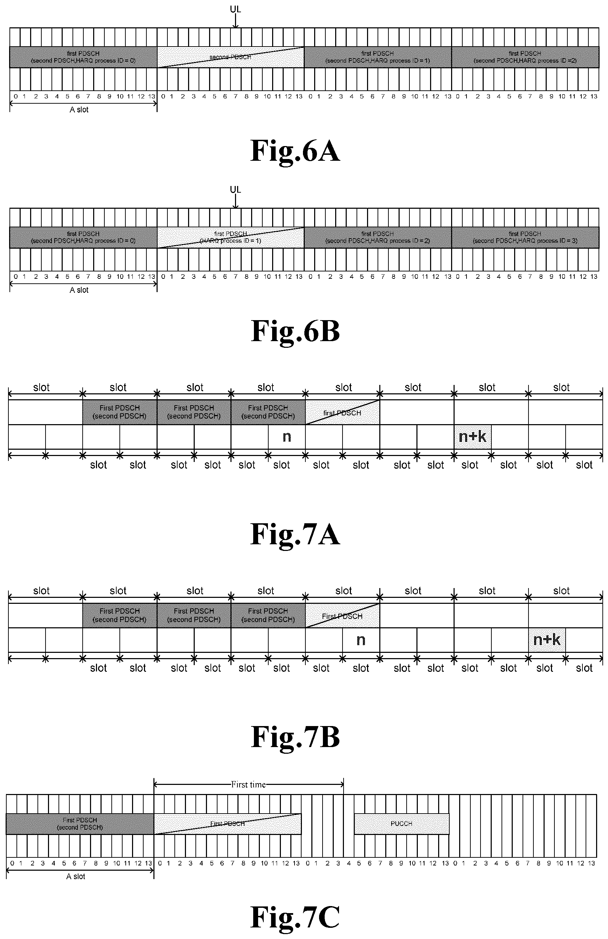

FIG. 6A is a schematic diagram of an HARQ process ID of at least one second PDSCH. As shown in FIG. 6A, the HARQ process ID indicated by a fourth information field is 0, indicating that an HARQ process ID of a first second PDSCH (a first slot) is 0, an HARQ process ID of a second second PDSCH (a third slot) is 1, and an HARQ process ID of a third second PDSCH (a fourth slot) is 2. The physical layer of the terminal equipment reports the HARQ information of the three second PDSCHs to the higher layer, the HARQ information at least including the HARQ process 0, 1,2 of the above three second PDSCHs.

In some embodiments, the HARQ process ID is the HARQ process ID of one of the at least two (M) first PDSCHs, and the terminal equipment determines HARQ process IDs of other (M-1) first PDSCHs in a predefined method.

In the above embodiment, the one first PDSCH may be a first one of M first PDSCHs. According to an order of the at least two (M) first PDSCHs, the HARQ process IDs are sequentially incremented by 1 or added by 1 and then performed modulo to determine HARQ process IDs of the remaining (M-1) first PDSCHs. For example, the HARQ process ID indicated by the fourth information field is X (X is a value in 0~Y), X being the HARQ process ID of the first one of the at least two (M) first PDSCHs, and an HARQ process ID of an *n-th* (n>1) first PDSCH is mod(X+n-1,Y), Y being the number of HARQ processes.

In the above embodiments, the method may further include (not shown, optional): a physical layer of the terminal equipment reports the HARQ information of the at least two (M) first PDSCH to a higher layer. The HARQ information includes the HARQ process ID of the first PDSCH, and may further include an NDI or an RV or a transport block size (TBS).

In the above embodiments, the method may further include (not shown, optional): the physical layer of the terminal equipment reports an invalid HARQ process ID in the HARQ process IDs of the at least two (M) first PDSCHs to the higher layer, the invalid HARQ process ID referring to an HARQ process ID without corresponding data. The terminal equipment may ignore information bits of the DCI used to indicate the NDI of the first PDSCH and/or the information bits of the RV in the second information field and/or the third information field.

In the above embodiment, the method may further include (not shown, optional): the physical layer of the terminal equipment does not report HARQ information of a first PDSCH in the at least two first PDSCHs that is not the second PDSCH to the higher layer, in other words, the physical layer of the terminal equipment reports the HARQ information of the first PDSCH that is the second PDSCH (i.e. the actually scheduled PDSCH) to the higher layer.

FIG. 6B is a schematic diagram of HARQ process IDs of at least two first PDSCHs. As shown in FIG. 6B, the HARQ process ID indicated by the fourth information field is 0, indicating that an HARQ process ID of a first one of the first PDSCHs (a first slot) is 0, an HARQ process ID of a second one of the first PDSCHs (a second slot) is 1, an HARQ process ID of a third one of the first PDSCHs (a third slot) is 2, and an HARQ process ID of a fourth one of the first PDSCHs (a fourth slot) is 3, and the physical layer of the terminal equipment reports the HARQ information of the four first PDSCHs to the higher layer, the HARQ information at least including the HARQ processes 0,1,2,3 of the four first PDSCHs; or, when the second one of the first PDSCHs is not actually scheduled (that is, when the second one of the first PDSCHs is not the second PDSCH), the physical layer of the terminal equipment reports the HARQ information of the first one, third one and fourth one of the first PDSCHs to the higher layer, the HARQ information at least including the HARQ processes 0,2,3 of the three first PDSCHs.

In some embodiments, the DCI may also include a fifth information field, which may be an HARQ-ACK timing indicator (i. e., PDSCH-to-HARQ_feedback indicator) field. The fifth information field is used to indicate feedback timing k of HARQ-ACK information; or, the DCI may not include the fifth information field, and the terminal equipment receives second configuration information (such as *dl-DataToUL-ACK* or *dl-DataToUL-ACKForDCIFormat1_2* for DCI format 1_2) configured by higher-layer signaling, the second configuration information being used to indicate the feedback time k of the HARQ-ACK information.

In some embodiments, the method may further include (not shown, optional): the terminal equipment feeds back the HARQ acknowledgement (HARQ-ACK) information; for example, the terminal equipment transmits HARQ-ACK information at a slot (slot n+k) with an index n+k, wherein a slot with an index n (slot n) is an ending slot of at least two (M) first PDSCHs or an ending slot of a last one of the at least two (M) first PDSCHs; or, a slot with an index n (slot n) is an ending slot of the at least one (N) second PDSCH or an ending slot of a last one of the at least one (N) second PDSCH, where, n and k are integers greater than 0, which shall be described below in detail.

In some embodiments, when the terminal equipment transmits the HARQ-ACK information by using a semi-static HARQ-ACK codebook (i.e. a Type-1 HARQ-ACK codebook), the slot with an index n (slot n) is the ending slot of the at least two (M) first PDSCHs or the ending slot of the last one of the at least two (M) first PDSCHs (an uplink slot index to which a downlink ending slot n' of the PDSCH corresponds is n), and k is an offset between a feedback slot of the HARQ-ACK information and the slot n. Reference may be made to existing techniques for a method for generating the semi-static codebook, which shall not be repeated herein any further. For example, the codebook may also be a Type-2 HARQ-ACK codebook or a Type-3 HARQ-ACK codebook. FIG. 7A is the schematic diagram of an HARQ-ACK feedback slot. As shown in FIG. 7A, the slot n (uplink slot) is the ending slot of the last first PDSCH (i.e. an uplink slot to which the downlink ending slot of the last first PDSCH corresponds), and the feedback slot of the HARQ-ACK information is n+k.

In some embodiments, when the terminal equipment transmits the HARQ-ACK information by using a dynamic HARQ-ACK codebook (i.e. a Type-2 HARQ-ACK codebook), the slot with an index n (slot n) is the ending slot of the at least one (N) second PDSCH or the ending slot of the last one of the at least one (N) second PDSCH (an uplink slot index to which a downlink ending slot n' of the PDSCH corresponds is n), and k is an offset between a feedback slot of the HARQ-ACK information and the slot n. Reference may be made to existing techniques for a method for generating the semi-static codebook, which shall not be repeated herein any further. For example, the codebook may also be a Type-1 HARQ-ACK codebook or a Type-3 HARQ-ACK codebook. FIG. 7B is the schematic diagram of an HARQ-ACK feedback slot. As shown in FIG. 7B, the slot n (uplink slot) is the ending slot of the last second PDSCH (i.e. an uplink slot to which the downlink ending slot of the last second PDSCH corresponds), and the feedback slot of the HARQ-ACK information is n+k.

The above embodiment illustrates the feedback timing of the HARQ-ACK information. In the embodiment of this disclosure, as generation of the HARQ-ACK information needs a certain processing time, it is possible that the HARQ-ACK information has not been generated when the HARQ-ACK information feedback time is reached. Feedback contents of the HARQ-ACK information, in other words, HARQ-ACK information of which PDSCHs is included in the HARQ-ACK information may be determined according to the above processing time, shall be described below.

In some embodiments, the terminal equipment transmits the HARQ-ACK information on a physical uplink channel, and the HARQ-ACK information includes the HARQ-ACK information of the at least one (N) second PDSCH; and an interval between a last symbol of the last one of the at least one (N) second PDSCH or a last symbol of the at least one (N) second PDSCH and a first symbol of the physical uplink channel is greater than or equal to a first time. When the interval between the last symbol of the last one of the at least one (N) second PDSCH or the last symbol of the at least one (N) second PDSCH and the first symbol of the physical uplink channel is less than the first time, the terminal equipment does not feed back the HARQ-ACK information of the at least one (N) second PDSCH. That is, if the terminal equipment is to feed back the HARQ-ACK information of the at least one (N) second PDSCH, the first symbol (uplink symbol) of the physical uplink channel should not start earlier than a symbol L1, where, L1 denotes an uplink symbol to which a first time after the last symbol of the at least one (N) second PDSCH corresponds. FIG. 7C is a schematic diagram of HARQ-ACK feedback. As shown in FIG. 7C, the interval between the last symbol of the last second PDSCH and the first symbol of the physical uplink channel is greater than or equal to the first time (e.g. $T_{proc,1}$). For example, the first time is predefined or preconfigured or obtained by parameter calculation, and reference may be made to existing techniques for details.

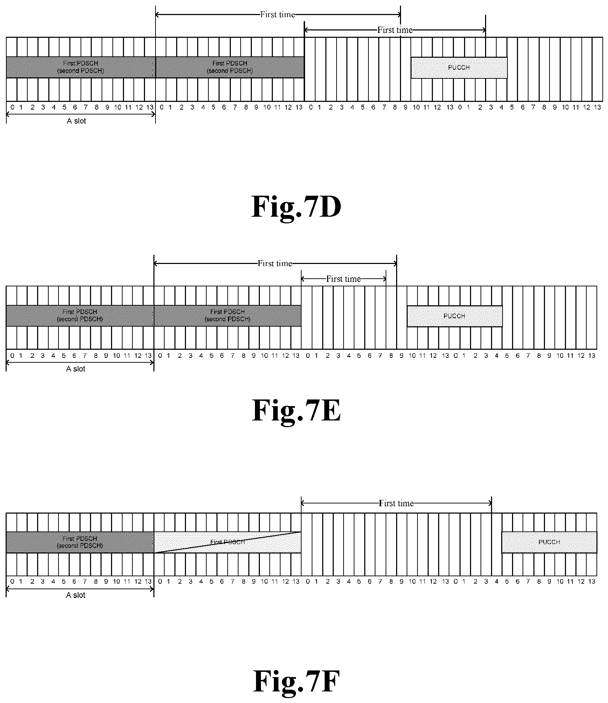

In some embodiments, the terminal equipment transmits the HARQ-ACK information on the physical uplink channel, and the HARQ-ACK information includes HARQ-ACK information of at least one (P) fourth PDSCH, the at least one (P) fourth PDSCH being at least one (P) PDSCH in the at least one (N) second PDSCH, wherein an interval between a last symbol of each fourth PDSCH and the first symbol of the physical uplink channel is greater than or equal to the first time. Intervals between last symbols of each second PDSCH other than P fourth PDSCHs in the N second PDSCHs and the first symbol of the physical uplink channel are less than the first time, and the terminal equipment does not feed back HARQ-ACK information of the other second PDSCHs. In other words, for a second PDSCH, if an interval between a last symbol of the second PDSCH and the first symbol of the physical uplink channel is greater than or equal to the first time, the terminal equipment provides HARQ-ACK information of the second PDSCH; otherwise, the terminal equipment does not provide the HARQ-ACK information of the second PDSCH. Processing methods in each second PDSCH are similar, and shall not be repeated herein any further. FIG. 7D is a schematic diagram of HARQ-ACK feedback. As shown in FIG. 7D, an interval between a last symbol of a second one of the second PDSCHs and the first symbol of the physical uplink channel is less than the first time, an interval between a last symbol of a first one of the second PDSCHs and the first symbol of the physical uplink channel is greater than the first time, and the terminal equipment feeds back HARQ-ACK information of the first one of the second PDSCHs, and does not feed back HARQ-ACK information of the second one of the second PDSCHs. For example, the first time is predefined or preconfigured or obtained by parameter calculation, and reference may be made to existing techniques for details, which shall not be repeated herein any further.

In some embodiments, the terminal equipment transmits the HARQ-ACK information on the physical uplink channel, and the HARQ-ACK information includes the HARQ-ACK information of the at least one (N) second PDSCH; and intervals between the last symbol of each second PDSCH in the at least one (N) second PDSCH and the first symbol of the physical uplink channel are greater than or equal to the first time. In other words, an interval between the first symbol of the physical uplink channel and a last symbol of any one of the second PDSCHs is greater than or equal to the first time, and first times to which different second PDSCHs correspond may be identical or different. FIG. 7E is a schematic diagram of the HARQ-ACK feedback. As shown in FIG. 7E, intervals between the last symbol of each second PDSCH and the first symbol of the physical uplink channel are all greater than the first time, and the terminal equipment feeds back HARQ-ACK information of the first one and second one of the second PDSCHs, but a length of the first time corresponding to the first one of the second PDSCHs and a length of the first time corresponding to the second one of the second PDSCHs are different. The first time is predefined or preconfigured or obtained by parameter calculation, and reference may be made to existing techniques for details, which shall not be repeated herein any further.

In some embodiments, the terminal equipment transmits the HARQ-ACK information on the physical uplink channel, and the HARQ-ACK information includes the HARQ-ACK information of the at least one (N) second PDSCH; and an interval between a last symbol of a last one of the at least two (M) first PDSCHs or a last symbol of the at least two (M) first PDSCHs and the first symbol of the physical uplink channel is greater than or equal to the first time. When the interval between the last symbol of the last one of the at least two (M) first PDSCHs or the last symbol of the at least two (M) first PDSCHs and the first symbol of the physical uplink channel is less than the first time, the terminal equipment does not feed back the HARQ-ACK information of at least one (N) second PDSCH. That is, if the terminal equipment is to feed back the HARQ-ACK information of the at least one (N) second PDSCH, the first symbol (uplink symbol) of the physical uplink channel should not start earlier than a symbol L1, where L1 denotes an uplink symbol to which a first time after the last symbol of the at least two (M) first PDSCH corresponds. FIG. 7F is a schematic diagram of HARQ-ACK feedback. As shown in FIG. 7F, the interval between the last symbol of the last first PDSCH and the first symbol of the physical uplink channel is greater than or equal to the first time. For example, the first time is predefined or preconfigured or obtained by parameter calculation, and reference may be made to existing techniques for details.

In the above embodiment, the physical uplink channel may be physical uplink control information or a physical uplink shared channel; however, the embodiment of this disclosure is not limited thereto. A position of the first symbol (uplink symbol) of the physical uplink channel may be determined according to existing techniques, and the embodiment of this disclosure is not limited thereto.

It should be noted that FIG. 2 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 2.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that multiple PDSCHs are scheduled by one piece of DCI, thereby reducing the burden of terminal equipment in monitoring the DCI, and reducing power consumption and complexity.

Embodiment of a second aspect

The embodiment of this disclosure provides a data transmission method, which shall be described from a side of a network device, with parts repeated with the embodiment of the first aspect being not going to be described herein any further.

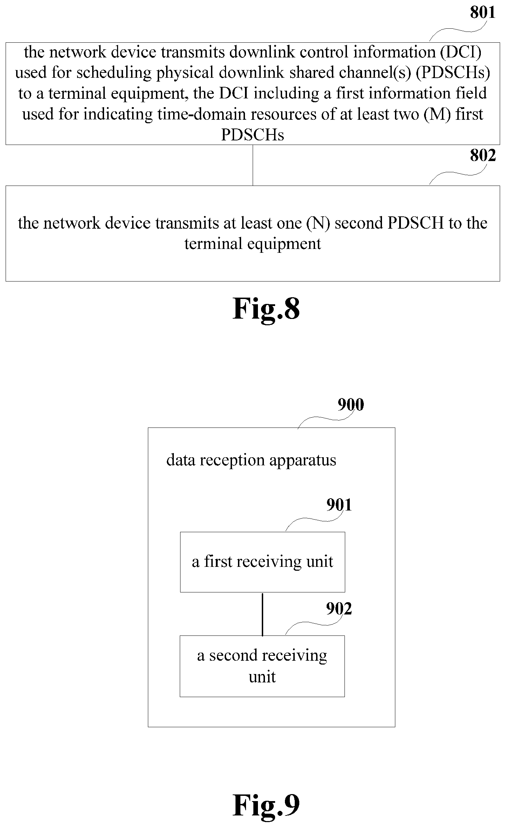

FIG. 8 is a schematic diagram of the data transmission method of the embodiment of this disclosure. As shown in FIG. 8, the method includes:

801: the network device transmits downlink control information (DCI) used for scheduling physical downlink shared channel(s) (PDSCHs) to a terminal equipment, the DCI including a first information field used for indicating time-domain resources of at least two (M) first PDSCHs; and

802: the network device transmits at least one (N) second PDSCH to the terminal equipment.

In some embodiments, implementations of 801 and 802 correspond to those of 201 and 202 in the embodiment of the first aspect, with repeated parts being not going to be described herein any further.

In some embodiments, reference may be made to the embodiment of the first aspect for contents of the DCI, the first PDSCH, a meaning of the second PDSCH, how the DCI indicates the first PDSCH and how to determine the second PDSCH, which shall not be described herein any further.

It can be seen from the above embodiment that multiple PDSCHs are scheduled by one piece of DCI, thereby reducing the burden of terminal equipment in monitoring the DCI, and reducing power consumption and complexity.

Embodiment of a third aspect

The embodiment of this disclosure provides a data reception apparatus. The apparatus may be, for example, a terminal equipment, or may be one or more components or assemblies configured in a terminal equipment, with contents identical to those in the embodiment of the first aspect being not going to be described herein any further.

FIG. 9 is a schematic diagram of the data reception apparatus of the embodiment of this disclosure. As shown in FIG. 9. a data reception apparatus 900 includes:

a first receiving unit 901 configured to receive downlink control information (DCI) used for scheduling physical downlink shared channel(s) (PDSCHs), the DCI including a first information field used for indicating time-domain resources of at least two (M) first PDSCHs; and

a second receiving unit 902 configured to receive at least one (N) second PDSCH.

In some embodiments, reference may be made to 201 and 202 in the embodiment of the first aspect for implementations of the first receiving unit 901 and the second receiving unit 902, with repeated parts being not going to be described herein any further.

In some embodiments, the DCI further includes a fourth information field, the fourth information field being used for indicating an HARQ process identifier, the HARQ process identifier indicated by the fourth information field being an HARQ process identifier of one second PDSCH in the at least one (N) second PDSCH.

For example, the one second PDSCH is a first one in the at least one (N) second PDSCH.

In this embodiment, the apparatus further includes:

a first determining unit (not shown, optional) configured to determine HARQ process identifier(s) of the at least one (N) second PDSCH according to the fourth information field; and

a first reporting unit (not shown, optional) configured to report HARQ information of the at least one (N) second PDSCH to a higher layer from a physical layer of the terminal equipment.

In some embodiments, the DCI further includes a fourth information field, the fourth information field being used for indicating an HARQ process identifier, the HARQ process identifier indicated by the fourth information field being an HARQ process identifier of one first PDSCH in the at least two (M) first PDSCHs.

For example, the one first PDSCH is a first one in the at least two (M) first PDSCHs.

In this embodiment, the apparatus further includes:

a second determining unit (not shown, optional) configured to determine HARQ process identifiers of the at least two (M) first PDSCHs according to the fourth information field; and

a second reporting unit (not shown, optional) configured to report an invalid HARQ process identifier in the HARQ process identifiers of the at least two (M) first PDSCHs to a higher layer from a physical layer of the terminal equipment.

In some embodiments, the apparatus may further include:

a first transmitting unit (not shown, optional) configured to transmit HARQ-ACK information at a slot with an index n+k (slot n+k), wherein a slot with an index n (slot n) is an ending slot of the at least two (M) first PDSCHs or an ending slot of a last first PDSCH in the at least two (M) first PDSCHs. For example, the first transmitting unit transmits the HARQ-ACK information by using a semi-static HARQ-ACK codebook; however, this embodiment is not limited thereto.

In some embodiments, the apparatus may further include:

a second transmitting unit configured to transmit HARQ-ACK information at a slot with an index n+k (slot n+k), wherein a slot with an index n (slot n) is an ending slot of the at least one (N) second PDSCHs or an ending slot of a last second PDSCH in the at least one (N) second PDSCHs. For example, the second transmitting unit transmits the HARQ-ACK information by using a dynamic HARQ-ACK codebook; however, this embodiment is not limited thereto.

Reference may be made to the embodiment of the first aspect for implementations of the first determining unit, the second determining unit, the first reporting unit, the second reporting unit, the first transmitting unit and the second transmitting unit, which shall not be described herein any further.

In some embodiments, the first transmitting unit or the second transmitting unit transmits the HARQ-ACK information on the physical uplink channel, the HARQ-ACK information including HARQ-ACK information of at least one (N) second PDSCH;

and an interval between a last symbol of a last one of the at least one (N) second PDSCH or a last symbol of the at least one (N) second PDSCH and a first symbol of the physical uplink channel is greater than or equal to a first time.

In some embodiments, the first PDSCHs are the second PDSCHs, and the number N of the second PDSCHs is equal to the number M of the first PDSCHs.

In some embodiments, the apparatus further includes:

a third receiving unit (not shown, optional) configured to receive first configuration information including at least one first information element, the first information element including at least one second information element,

a value of the first information field corresponding to one first information element in the first configuration information, the one first information element being used to configure a time-domain relationship between the at least two (M) first PDSCHs and a PDCCH carrying the DCI.

In some embodiments, the apparatus further includes:

a fourth receiving unit (not shown, optional) configured to receive first configuration information including at least one first information element, the first information element including information of a first number, the first number indicating the number of first PDSCHs to which the first information element corresponds.

Reference may be made to the embodiment of the first aspect for a specific form of the first configuration information, which shall not be described herein any further.

In some embodiments, the DCI further includes a second information field indicating an RV and/or a third information field indicating an NDI, size(s) of the second information field and/or the third information field being related to a second number, the second number being a maximum number in numbers of first PDSCHs to which all first information elements in the first configuration information correspond, wherein the maximum number is a maximum number in numbers of second information elements contained in all first information elements in the first configuration information or a maximum number in first numbers contained in all first information elements in the first configuration information.

In some embodiments, the apparatus further includes:

a third determining unit (not shown, optional) configured to determine the at least one (N) second PDSCH according to at least one of the following: a semi-statically configured transmission direction, a configured PRACH resource, information dynamically scheduling uplink transmission or information dynamically configuring a transmission direction, a configured invalid symbol, or whether it is cross-slot. Reference may be made to the embodiment of the first aspect for implementation of the third determining unit, which shall not be described herein any further.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data reception apparatus 900 may further include other components or modules, and reference may be made to related techniques for particulars of these components or modules.

Furthermore, for the sake of simplicity, connection relationships between the components or modules or signal profiles thereof are only illustrated in FIG. 9. However, it should be understood by those skilled in the art that such related techniques as bus connection, may be adopted. And the above components or modules may be implemented by hardware, such as a processor, a memory, a transmitter, and a receiver, which are not limited in the embodiment of this disclosure.

It can be seen from the above embodiment that multiple PDSCHs are scheduled by one piece of DCI, thereby reducing the burden of terminal equipment in monitoring the DCI, and reducing power consumption and complexity.

Embodiment of a fourth aspect

The embodiment of this disclosure provides a data transmission apparatus. The apparatus may be, for example, a network device, or may be one or more components or assemblies configured in a network device, with contents identical to those in the embodiment of the second aspect being not going to be described herein any further.

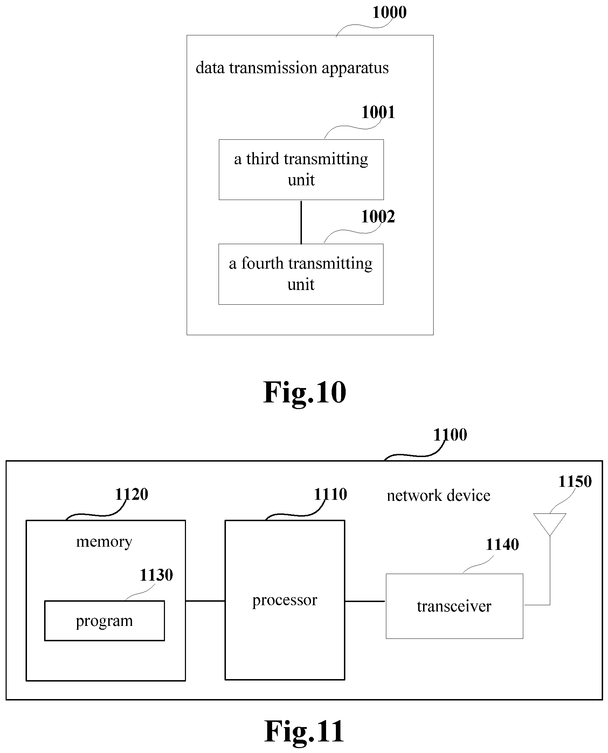

FIG. 10 is a schematic diagram of the data transmission apparatus of the embodiment of this disclosure. As shown in FIG. 10, a data transmission apparatus 1000 includes:

a third transmitting unit 1001 configured to transmit downlink control information (DCI) used for scheduling physical downlink shared channel(s) (PDSCHs) to a terminal equipment, the DCI including a first information field used for indicating time-domain resources of at least two (M) first PDSCHs; and
a fourth transmitting unit 1002 configured to transmit at least one (N) second PDSCH to the terminal equipment.

In some embodiments, reference may be made to 801 and 802 in the embodiment of the second aspect for implementations of the third transmitting unit 1001 and the fourth transmitting unit 1002, with repeated parts being not going to be described herein any further.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data transmission apparatus 1000 may further include other components or modules, and reference may be made to related techniques for particulars of these components or modules.

Furthermore, for the sake of simplicity, connection relationships between the components or modules or signal profiles thereof are only illustrated in FIG. 10. However, it should be understood by those skilled in the art that such related techniques as bus connection, may be adopted. And the above components or modules may be implemented by hardware, such as a processor, a memory, a transmitter, and a receiver, which are not limited in the embodiment of this disclosure.

It can be seen from the above embodiment that multiple PDSCHs are scheduled by one piece of DCI, thereby reducing the burden of terminal equipment in monitoring the DCI, and reducing power consumption and complexity.

Embodiment of a fifth aspect

The embodiment of this disclosure provides a communication system, and reference may be made to FIG. 1, with contents identical to those in the embodiments of the first to the fourth aspects being not going to be described herein any further.

In some embodiments, the communication system 100 may at least include: a terminal equipment 102 and a network device 101.

In some embodiments, the terminal equipment 102 receives downlink control information (DCI) used for scheduling physical downlink shared channel(s) (PDSCHs) and transmitted by the network device 101, the DCI including a first information field used for indicating time-domain resources of at least two (M) first PDSCHs; and the terminal equipment 102 receives at least one (N) second PDSCH transmitted by the network device 101.

The embodiment of this disclosure further provides a network device, which may be, for example, a base station. However, this disclosure is not limited thereto, and it may also be another network device.

FIG. 11 is a schematic diagram of a structure of the network device of the embodiment of this disclosure. As shown in FIG. 11, a network device 1100 may include a processor 1110 (such as a central processing unit (CPU)) and a memory 1120, the memory 1120 being coupled to the processor 1110. The memory 1120 may store various data, and furthermore, it may store a program 1130 for data processing, and execute the program 1130 under control of the processor 1110.

For example, the processor 1110 may be configured to execute a program to carry out the data transmission method as described in the embodiment of the second aspect. For example, the processor 1110 may be configured to execute the following control: transmit downlink control information (DCI) used for scheduling physical downlink shared channel(s) (PDSCHs) to the terminal equipment, the DCI including a first information field used for indicating time-domain resources of at least two (M) first PDSCHs; and transmit at least one (N) second PDSCH to the terminal equipment.

Furthermore, as shown in FIG. 11, the network device 1100 may include a transceiver 1140, and an antenna 1150, etc. Functions of the above components are similar to those in the related art, and shall not be described herein any further. It should be noted that the network device 1100 does not necessarily include all the parts shown in FIG. 11, and furthermore, the network device 1100 may include parts not shown in FIG. 11, and the related art may be referred to.

The embodiment of this disclosure further provides a terminal equipment; however, this disclosure is not limited thereto, and it may also be another equipment.

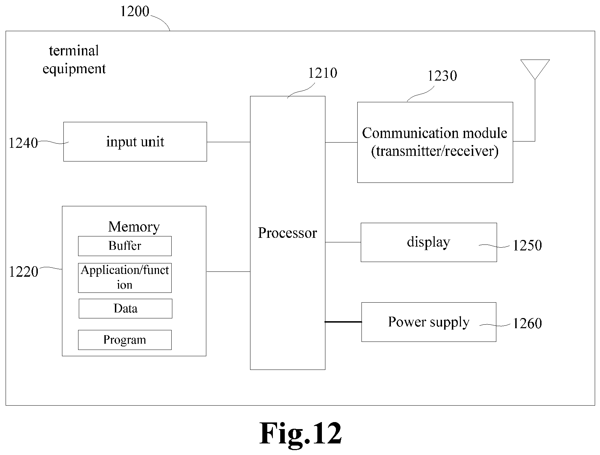

FIG. 12 is a schematic diagram of the terminal equipment of the embodiment of this disclosure. As shown in FIG. 12, a terminal equipment 1200 may include a processor 1210 and a memory 1220, the memory 1220 storing data and a program and being coupled to the processor 1210. It should be noted that this figure is illustrative only, and other types of structures may also be used, so as to supplement or replace this structure and achieve a telecommunications function or other functions.

For example, the processor 1210 may be configured to execute a program to carry out the data reception method as described in the embodiment of the first aspect. For example, the processor 1210 may be configured to perform the following control: receive downlink control information (DCI) used for scheduling physical downlink shared channel(s) (PDSCHs), the DCI including a first information field used for indicating time-domain resources of at least two (M) first PDSCHs; and receive at least one (N) second PDSCH.

As shown in FIG. 12, the terminal equipment 1200 may further include a communication module 1230, an input unit 1240, a display 1250, and a power supply 1260, wherein functions of the above components are similar to those in the related art, which shall not be described herein any further. It should be noted that the terminal equipment 1200 does not necessarily include all the parts shown in FIG. 12, and the above components are not necessary. Furthermore, the terminal equipment 1200 may include parts not shown in FIG. 12, and the related art may be referred to.

An embodiment of this disclosure provides a computer readable program, which, when executed in a terminal equipment, will cause the terminal equipment to carry out the data reception method as described in the embodiment of the first aspect.

An embodiment of this disclosure provides a computer storage medium, including a computer readable program, which will cause a terminal equipment to carry out the data reception method as described in the embodiment of the first aspect.

An embodiment of this disclosure provides a computer readable program, which, when executed in a network device, will cause the network device to carry out the data transmission method as described in the embodiment of the second aspect.

An embodiment of this disclosure provides a computer storage medium, including a computer readable program, which will cause a network device to carry out the data transmission method as described in the embodiment of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the principle of the present invention, and such variants and modifications fall within the scope of the present invention.

As to implementations containing the above embodiments, following supplements are further disclosed.

1. A data reception method, applicable to a terminal equipment, characterized in that the method includes:

receiving, by the terminal equipment, downlink control information (DCI) used for scheduling physical downlink shared channel(s) (PDSCHs), the DCI including a first information field used for indicating time-domain resources of at least two (M) first PDSCHs; and
receiving at least one (N) second PDSCH by the terminal equipment.

2. The method according to supplement 1, wherein the DCI further includes a fourth information field, the fourth information field being used for indicating an HARQ process identifier, the HARQ process identifier indicated by the fourth information field being an HARQ process identifier of one first PDSCH in the at least two (M) first PDSCHs.

3. The method according to supplement 2, wherein the one first PDSCH is a first one in the at least two (M) first PDSCHs.

4. The method according to supplement 2, wherein the method further includes: determining HARQ process identifiers of the at least two (M) first PDSCHs.

5. The method according to any one of supplements 1-4, wherein a physical layer of the terminal equipment does not report HARQ information of a first PDSCH that is not a second PDSCH in the at least two (M) first PDSCHs to the higher layer.

6. The method according to any one of supplements 1-4, wherein a physical layer of the terminal equipment reports HARQ information of the at least one (N) second PDSCH to the higher layer.

7. The method according to any one of supplements 1-4, wherein the method further includes:
reporting an invalid HARQ process identifier in the HARQ process identifiers of the at least two (M) first PDSCHs by a physical layer of the terminal equipment to the higher layer.

8. The method according to supplement 7, wherein the invalid HARQ process identifier refers to an HARQ process identifier with no corresponding data.

9. The method according to any one of supplements 1-4, wherein the method further includes:
reporting the HARQ information of the at least two (M) first PDSCHs by a physical layer of the terminal equipment to the higher layer.

10. The method according to supplement 1, wherein the DCI further includes a fourth information field, the fourth information field being used for indicating an HARQ process identifier, the HARQ process identifier indicated by the fourth information field being an HARQ process identifier of one second PDSCH in the at least one (N) second PDSCH.

11. The method according to supplement 10, wherein the one second PDSCH is a first one in the at least one (N) second PDSCH.

12. The method according to supplement 10, wherein the method further includes: determining HARQ process identifier(s) in the at least one (N) second PDSCH.

13. The method according to any one of supplements 10-12, wherein the method further includes:
reporting the HARQ information of the at least one (N) second PDSCH by the physical layer of the terminal equipment to the higher layer.

14. The method according to any one of supplements 1-13, wherein the method further includes:
transmitting HARQ-ACK information by the terminal equipment at a slot with an index n+k (slot n+k), wherein a slot with an index n (slot n) is an ending slot of the at least two (M) first PDSCHs or an ending slot of a last first PDSCH in the at least two (M) first PDSCHs.

15. The method according to supplement 14, wherein the terminal equipment transmits the HARQ-ACK information by using a semi-static HARQ-ACK codebook.

16. The method according to any one of supplements 1-13, wherein the method further includes:
transmitting HARQ-ACK information by the terminal equipment at a slot with an index n+k (slot n+k), wherein a slot with an index n (slot n) is an ending slot of the at least one (N) second PDSCH or an ending slot of a last second PDSCH in the at least one (N) second PDSCH.

17. The method according to supplement 16, wherein the terminal equipment transmits the HARQ-ACK information by using a dynamic HARQ-ACK codebook.

18. The method according to any one of supplements 14-17, wherein the terminal equipment transmits the HARQ-ACK information on a physical uplink channel, the HARQ-ACK information including HARQ-ACK information of the at least one (N) second PDSCH,
and an interval between a last symbol of a last second PDSCH in the at least one (N) second PDSCH or a last symbol of the at least one (N) second PDSCH and a first symbol of the physical uplink channel is greater than or equal to a first time.

19. The method according to any one of supplements 14-17, wherein the terminal equipment transmits the HARQ-ACK information on a physical uplink channel, the HARQ-ACK information including HARQ-ACK information of at least one (P) fourth PDSCH;
the at least one (P) fourth PDSCH being at least one (P) PDSCH in the at least one (N) second PDSCH, wherein an interval between a last symbol of each fourth PDSCH and a first symbol of the physical uplink channel is greater than or equal to a first time.

20. The method according to any one of supplements 14-17, wherein the terminal equipment transmits the HARQ-ACK information on a physical uplink channel, the HARQ-ACK information including HARQ-ACK information of the at least one (N) second PDSCH,
an interval between a last symbol of each second PDSCH in the at least one (N) second PDSCH and a first symbol of the physical uplink channel being greater than or equal to a first time.

21. The method according to any one of supplements 14-17, wherein the terminal equipment transmits the HARQ-ACK information on a physical uplink channel, the HARQ-ACK information including HARQ-ACK information of the at least one (N) second PDSCH,
an interval between a last symbol of a last first PDSCH in the at least two (M) first PDSCHs or a last symbol of the at least two (M) first PDSCHs and a first symbol of the physical uplink channel being greater than or equal to a first time.

22. The method according to any one of supplements 1-21, wherein the first PDSCH is the second PDSCH, and the number N of the second PDSCHs is equal to the number M of the first PDSCHs.

23. The method according to any one of supplements 1-22, wherein time-domain resources of the at least two (M) first PDSCHs contain time-domain resources of the at least one (N) second PDSCH.

24. The method according to any one of supplements 1-23, wherein the at least two (M) first PDSCHs are contiguous or discontiguous.

25. The method according to any one of supplements 1-24, wherein numbers of time-domain symbols of the at least two (M) first PDSCHs are identical or different.

26. The method according to any one of supplements 1-25, wherein respective first PDSCHs in the at least two (M) first PDSCHs are in one slot or not in one slot.

27. The method according to any one of supplements 1-26, wherein the method further includes:

receiving first configuration information including at least one first information element by the terminal equipment, the first information element including at least one second information element,
a value of the first information field corresponding to one first information element in the first configuration information, the one first information element being used to configure a time-domain relationship between the at least two (M) first PDSCHs and a PDCCH carrying the DCI.

28. The method according to supplement 27, wherein each second information element in the one first information element respectively includes time-domain resource configuration information of one first PDSCH.

29. The method according to any one of supplements 1-26, wherein the method further includes:
receiving first configuration information including at least one first information element by the terminal equipment, the first information element including information of a first number, the first number indicating the number of first PDSCHs to which the first information element corresponds.

30. The method according to any one of supplements 1-29, wherein the DCI further includes a second information field indicating an RV and/or a third information field indicating an NDI, size(s) of the second information field and/or the third information field being related to a second number, the second number being a maximum number in numbers of first PDSCHs to which all first information elements in the first configuration information correspond.

31. The method according to supplement 30, wherein the maximum number is a maximum number in numbers of second information elements contained in all first information elements in the first configuration information or a maximum number in first numbers contained in all first information elements in the first configuration information.

32. The method according to any one of supplement 1 to 31, wherein the terminal equipment determines the at least one second PDSCH according to at least one of the following: a semi-statically configured transmission direction, a configured PRACH resource, dynamically scheduled uplink transmission or a dynamically configured transmission direction, a configured invalid symbol, or whether it is cross-slot.

33. The method according to supplement 32, wherein when at least one symbol of the first PDSCH is semi-statically configured as being of uplink or is configured as being invalid, the first PDSCH is not taken as the second PDSCH;

or, when at least one symbol in the first PDSCH is semi-statically configured as being of uplink, the second PDSCH corresponds to the first PDSCH one-to-one, and a slot where the second PDSCH is located is identical to or different from a slot where the first PDSCH to which the second PDSCH corresponds; or, the first PDSCH is divided into at least two third PDSCHs excluding the at least one uplink symbol, and the at least two third PDSCHs obtained after division and the first PDSCH excluding the uplink symbol are taken as the at least one (N) second PDSCH.

34. The method according to supplement 32 or 33, wherein when at least one symbol in the first PDSCH is configured with a PRACH or at least one symbol is located in a third number of symbols (referred to as spacing symbols, for example) before a PRACH is configured, the first PDSCH is not taken as the second PDSCH.

35. The method according to any one of supplements 32-34, wherein when time-domain resources of the first PDSCH are cross slots, the first PDSCH is not taken as the second PDSCH; or, the cross-slot first PDSCH is divided into at least two third PDSCHs that are not cross slots, and the at least two third PDSCHs obtained after division and the first PDSCH that is not cross slots are taken as the at least one (N) second PDSCH.

36. The method according to any one of supplements 32-35, wherein when at least one symbol in the first PDSCH is dynamically scheduled with respect to uplink transmission or a transmission direction thereof is dynamically configured as being of uplink or invalid, the first PDSCH is not taken as the second PDSCH;

or, when at least one symbol in the first PDSCH is dynamically scheduled with respect to uplink transmission or a transmission direction thereof is dynamically configured as being of uplink or invalid, the second PDSCH corresponds to the first PDSCH one-to-one, and a slot where the second PDSCH is located is identical to or different from a slot where the first PDSCH to which the second PDSCH corresponds; or, the first PDSCH is divided into at least two third PDSCHs excluding the at least one uplink symbol, and the at least two third PDSCHs obtained after division and the first PDSCH excluding the uplink symbol are taken as the at least one (N) second PDSCH.

37. The method according to supplement 36, wherein information for dynamically scheduling the uplink transmission or information for dynamically configuring the transmission direction is transmitted before the DCI.

38. A data transmission method, applicable to a network device, characterized in that the method includes:

transmitting downlink control information (DCI) used for scheduling physical downlink shared channel(s) (PDSCHs) by the network device to a terminal equipment, the DCI including a first information field used for indicating time-domain resources of at least two (M) first PDSCHs; and transmitting at least one (N) second PDSCH by the network device to the terminal equipment.

39. A data reception apparatus, applicable to a terminal equipment, characterized in that the apparatus includes:

a first receiving unit configured to receive downlink control information (DCI) used for scheduling physical downlink shared channel(s) (PDSCHs), the DCI including a first information field used for indicating time-domain resources of at least two (M) first PDSCHs; and a second receiving unit configured to receive at least one (N) second PDSCH.

40. The apparatus according to supplement 39, wherein the DCI further includes a fourth information field, the fourth information field being used for indicating an HARQ process identifier, the HARQ process identifier indicated by the fourth information field being an HARQ process identifier of one first PDSCH in the at least two (M) first PDSCH.

41. The apparatus according to supplement 40, wherein the one first PDSCH is a first one in the at least two (M) first PDSCH.

42. The apparatus according to supplement 40, wherein the apparatus further includes:

a first determining unit configured to determine HARQ process identifiers of the at least two (M) first PDSCH.

43. The apparatus according to any one of supplements 39-42, wherein the apparatus further includes:

a processing unit configured to not to report HARQ information of a first PDSCH in the at least two (M) first PDSCHs that is not the second PDSCH at the physical layer of the terminal equipment to the higher layer.

44. The apparatus according to any one of supplements 39-42, wherein the apparatus further includes:

a first reporting unit configured to report HARQ information of the at least one (N) second PDSCH to a higher layer from a physical layer of the terminal equipment.

45. The apparatus according to any one of supplements 39-42, wherein the apparatus further includes:

a third reporting unit configured to report an invalid HARQ process ID in the HARQ process IDs of the at least two (M) first PDSCHs at the physical layer of the terminal equipment to the higher layer.

46. The apparatus according to supplement 45, wherein the invalid HARQ process ID refers to an HARQ process ID without corresponding data.

47. The apparatus according to any one of supplements 39-42, wherein the apparatus further includes:

a first reporting unit configured to report HARQ information of the at least two (M) first PDSCHs at the physical layer of the terminal equipment to the higher layer.

48. The apparatus according to supplement 39, wherein the DCI further includes a fourth information field, the fourth information field being used for indicating an HARQ process identifier, the HARQ process identifier indicated by the fourth information field being an HARQ process identifier of one second PDSCH in the at least one (N) second PDSCHs.

49. The apparatus according to supplement 48, wherein the one second PDSCH is a first one in the at least one (N) second PDSCH.

50. The apparatus according to supplement 48, wherein the apparatus further includes:

a second determining unit configured to determine HARQ process identifier(s) of the at least one (N) second PDSCHs.

51. The apparatus according to any one of supplements 48-50, wherein the apparatus further includes:

a second reporting unit configured to report the HARQ information of the at least one (N) second PDSCH to a higher layer at the physical layer of the terminal equipment.

52. The apparatus according to any one of supplements 39-51, wherein the apparatus further includes:

a first transmitting unit configured to transmit HARQ-ACK information at a slot with an index n+k (slot n+k), wherein a slot with an index n (slot n) is an ending slot of the at least two (M) first PDSCHs or an ending slot of a last first PDSCH in the at least two (M) first PDSCHs.

53. The apparatus according to supplement 52, wherein the first transmitting unit transmits the HARQ-ACK information by using a semi-static HARQ-ACK codebook.

54. The apparatus according to any one of supplements 39-51, wherein the apparatus further includes:

a second transmitting unit configured to transmit HARQ-ACK information at a slot with an index n+k (slot n+k), wherein a slot with an index n (slot n) is an ending slot of the at least one (N) second PDSCH or an ending slot of a last one of the at least one (N) second PDSCH.

55. The apparatus according to supplement 54, wherein the second transmitting unit transmits the HARQ-ACK information by using a dynamic HARQ-ACK codebook.

56. The apparatus according to any one of supplements 52-55, wherein the first transmitting unit or the second transmitting unit transmits the HARQ-ACK information on the physical uplink channel, the HARQ-ACK information including HARQ-ACK information of the at least one (N) second PDSCH;

and an interval between a last symbol of a last one of the at least one (N) second PDSCH or a last symbol of the at least one (N) second PDSCH and a first symbol of the physical uplink channel is greater than or equal to a first time.

57. The apparatus according to any one of supplements 52-55, wherein the first transmitting unit or the second transmitting unit transmits the HARQ-ACK information on a physical uplink channel, the HARQ-ACK information including HARQ-ACK information of at least one (P) fourth PDSCH;

the at least one (P) fourth PDSCH being at least one (P) PDSCH in the at least one (N) second PDSCH, wherein an interval between a last symbol of each fourth PDSCH and a first symbol of the physical uplink channel is greater than or equal to a first time.

58. The apparatus according to any one of supplements 52-55, wherein the first transmitting unit or the second transmitting unit transmits the HARQ-ACK information on a physical uplink channel, the HARQ-ACK information including HARQ-ACK information of the at least one (N) second PDSCH,

an interval between a last symbol of each second PDSCH in the at least one (N) second PDSCH and a first symbol of the physical uplink channel being greater than or equal to a first time.

59. The apparatus according to any one of supplements 52-55, wherein the first transmitting unit or the second transmitting unit transmits the HARQ-ACK information on the physical uplink channel, and the HARQ-ACK information includes HARQ-ACK information of the at least one (N) second PDSCH,

and an interval between a last symbol of a last one of the at least two (M) first PDSCHs or a last symbol of the at least two (M) first PDSCHs and the first symbol of the physical uplink channel is greater than or equal to the first time.

60. The apparatus according to any one of supplements 39-59, wherein the first PDSCH is the second PDSCH, and the number N of the second PDSCHs is equal to the number M of the first PDSCHs.

61. The apparatus according to any one of supplements 39-60, wherein time-domain resources of the at least two (M) first PDSCHs contain time-domain resources of the at least one (N) second PDSCH.

62. The apparatus according to any one of supplements 39-61, wherein the at least two (M) first PDSCHs are contiguous or discontiguous.

63. The apparatus according to any one of supplements 39-62, wherein numbers of time-domain symbols of the at least two (M) first PDSCHs are identical or different.

64. The apparatus according to any one of supplements 39-63, wherein respective first PDSCHs in the at least two (M) first PDSCHs are in one slot or not in one slot.

65. The apparatus according to any one of supplements 39-64, wherein the apparatus further includes:

a third receiving unit configured to receive first configuration information including at least one first information element, the first information element including at least one second information element,

a value of the first information field corresponding to one first information element in the first configuration information, the one first information element being used to configure a time-domain relationship between the at least two (M) first PDSCHs and a PDCCH carrying the DCI.

66. The apparatus according to supplement 65, wherein each second information element in the one first information element respectively includes time-domain resource configuration information of one first PDSCH.

67. The apparatus according to any one of supplements 39-64, wherein the apparatus further includes:

a fourth receiving unit configured to receive first configuration information including at least one first information element, the first information element including information of a first number, the first number indicating the number of first PDSCHs to which the first information element corresponds.

68. The apparatus according to any one of supplements 39-67, wherein the DCI further includes a second information field indicating an RV and/or a third information field indicating an NDI, size(s) of the second information field and/or the third information field being related to a second number, the second number being a maximum number in numbers of first PDSCHs to which all first information elements in the first configuration information correspond.

69. The apparatus according to supplement 68, wherein the maximum number is a maximum number in numbers of second information elements contained in all first information elements in the first configuration information or a maximum number in first numbers contained in all first information elements in the first configuration information.

70. The apparatus according to any one of supplements 39-69, wherein the apparatus further includes:

a third determining unit configured to determine the at least one (N) second PDSCH according to at least one of the following: a semi-statically configured transmission direction, a configured PRACH resource, information dynamically scheduling uplink transmission or information dynamically configuring a transmission direction, a configured invalid symbol, or whether it is cross-slot.

71. The apparatus according to supplement 70, wherein when at least one symbol of the first PDSCH is semi-statically configured as being uplink is configured as being invalid, the first PDSCH is not taken as the second PDSCH;

or, when at least one symbol of the first PDSCH is semi-statically configured as being uplink, the second PDSCH corresponds to the first PDSCH one by one, and the slot of the second PDSCH is identical or different from the slot of the first PDSCH corresponding thereto;

or, the first PDSCH is divided into at least two third PDSCHs that do not contain the at least one uplink symbol, and the divided at least two third PDSCHs and a first PDSCH containing no uplink symbol are taken as at least one (N) second PDSCH.

72. The apparatus according to supplement 70 or 71, wherein when at least one symbol of the first PDSCH is configured with a PRACH, or at least one symbol of the first PDSCH is a symbol of a third number (such as being referred to as an interval symbol) before the configured PRACH, the first PDSCH is not taken as the second PDSCH.

73. The apparatus according to any one of supplements 70-73, wherein when the time-domain resource of the first PDSCH is cross-slot, the first PDSCH is not taken as the second PDSCH;

or, the cross-slot first PDSCH is divided into at least two third PDSCHs that are not cross-slot, and the at least two divided third PDSCHs and the first PDSCH that is not cross-slot are taken as at least one (N) second PDSCH.

74. The apparatus according to any one of supplements 70-73, wherein when at least one symbol in the first PDSCH is dynamically scheduled with respect to uplink transmission or a transmission direction thereof is dynamically configured as being uplink or invalid, the first PDSCH is not taken as the second PDSCH;

or, when at least one symbol in the first PDSCH is dynamically scheduled with respect to uplink transmission or a transmission direction thereof is dynamically configured as being uplink or invalid, the second PDSCH corresponds to the first PDSCH one by one, and the slot of the second PDSCH is identical or different from the slot of the corresponding first PDSCH;

or, the first PDSCH is divided into at least two third PDSCHs that do not contain the at least one uplink symbol, and the divided at least two third PDSCHs and the first PDSCH that does not contain the uplink symbol are taken as at least one (N) second PDSCH.

75. The apparatus according to supplement 74, wherein the information used for dynamically scheduling the uplink transmission or the information used for dynamically configuring the transmission direction is transmitted before the DCI.

76. A data transmission apparatus, applicable to a network device, characterized in that the apparatus includes:

a third transmitting unit configured to transmit downlink control information (DCI) used for scheduling physical downlink shared channel(s) (PDSCHs) to a terminal equipment, the DCI including a first information field used for indicating time-domain resources of at least two (M) first PDSCHs; and

a fourth transmitting unit configured to transmit at least one (N) second PDSCH to the terminal equipment.

## Claims

1. A data reception apparatus, applicable to a terminal equipment, **characterized in that** the apparatus comprises:

a first receiving unit configured to receive downlink control information (DCI) used for scheduling physical downlink shared channel(s) (PDSCHs), the DCI comprising a first information field used for indicating time-domain resources of at least two (M) first PDSCHs; and

a second receiving unit configured to receive at least one (N) second PDSCH.

2. The apparatus according to claim 1, wherein the DCI further comprises a fourth information field, the fourth information field being used for indicating an HARQ process identifier, the HARQ process identifier indicated by the fourth information field being an HARQ process identifier of one second PDSCH in the at least one (N) second PDSCH.

3. The apparatus according to claim 2, wherein the one second PDSCH is a first one in the at least one (N) second PDSCH.

4. The apparatus according to claim 2, wherein the apparatus further comprises:
a first determining unit configured to determine HARQ process identifier(s) of the at least one (N) second PDSCH according to the fourth information field.

5. The apparatus according to claim 2, wherein the apparatus further comprises:
a first reporting unit configured to report HARQ information of the at least one (N) second PDSCH to a higher layer from a physical layer of the terminal equipment.

6. The apparatus according to claim 1, wherein the DCI further comprises a fourth information field, the fourth information field being used for indicating an HARQ process identifier, the HARQ process identifier indicated by the fourth information field being an HARQ process identifier of one first PDSCH in the at least two (M) first PDSCHs.

7. The apparatus according to claim 6, wherein the one first PDSCH is a first one in the at least two (M) first PDSCHs.

8. The apparatus according to claim 6, wherein the apparatus further comprises:
a second determining unit configured to determine HARQ process identifiers of the at least two (M) first PDSCHs according to the fourth information field.

9. The apparatus according to claim 1, wherein the apparatus further comprises:
a second reporting unit configured to report an invalid HARQ process identifier in HARQ process identifiers of the at least two (M) first PDSCHs to a higher layer from a physical layer of the terminal equipment.

10. The apparatus according to claim 1, wherein the apparatus further comprises:
a first transmitting unit configured to transmit HARQ-ACK information at a slot with an index n+k (slot n+k), wherein a slot with an index n (slot n) is an ending slot of the at least two (M) first PDSCHs or an ending slot of a last first PDSCH in the at least two (M) first PDSCHs, or a slot with an index n (slot n) is an ending slot of the at least one (N) second PDSCH or an ending slot of a last second PDSCH in the at least one (N) second PDSCH.

11. The apparatus according to claim 10, wherein the slot with an index n (slot n) is an ending slot of the at least two (M) first PDSCHs or an ending slot of a last first PDSCH in the at least two (M) first PDSCHs, and the first transmitting unit transmits the HARQ-ACK information by using a semi-static HARQ-ACK codebook.

12. The apparatus according to claim 10, wherein the slot with an index n (slot n) is an ending slot of the at least one (N) second PDSCH or an ending slot of a last second PDSCH in the at least one (N) second PDSCH, and the first transmitting unit transmits the HARQ-ACK information by using a dynamic HARQ-ACK codebook.

13. The apparatus according to claim 10, wherein the first transmitting unit transmits the HARQ-ACK information on a physical uplink channel, the HARQ-ACK information comprising HARQ-ACK information of the at least one (N) second PDSCH,
and an interval between a last symbol of a last second PDSCH in the at least one (N) second PDSCH or a last symbol of the at least one (N) second PDSCH and a first symbol of the physical uplink channel is greater than or equal to a first time.

14. The apparatus according to claim 1, wherein the first PDSCH is the second PDSCH, and the number N of the second PDSCHs is equal to the number M of the first PDSCHs.

15. The apparatus according to claim 1, wherein the apparatus further comprises:

a third receiving unit configured to receive first configuration information comprising at least one first information element, the first information element comprising at least one second information element,
a value of the first information field corresponding to one first information element in the first configuration information, the one first information element being used to configure a time-domain relationship between the at least two (M) first PDSCHs and a PDCCH carrying the DCI.

16. The apparatus according to claim 1, wherein the apparatus further comprises:
a fourth receiving unit configured to receive first configuration information comprising at least one first information element, the first information element comprising information of a first number, the first number indicating the number of first PDSCHs to which the first information element corresponds.

17. The apparatus according to claim 16, wherein the DCI further comprises a second information field indicating an RV and/or a third information field indicating an NDI, size(s) of the second information field and/or the third information field being related to a second number, the second number being a maximum number in numbers of first PDSCHs to which all first information elements in the first configuration information correspond.

18. The apparatus according to claim 17, wherein the maximum number is a maximum number in numbers of second information elements contained in all first information elements in the first configuration information or a maximum number in first numbers contained in all first information elements in the first configuration information.

19. The apparatus according to claim 1, wherein the apparatus further comprises:
a third determining unit configured to determine the at least one (N) second PDSCH according to at least one of the following: a semi-statically configured transmission direction, a configured PRACH resource, information dynamically scheduling uplink transmission or information dynamically configuring a transmission direction, a configured invalid symbol, or whether it is cross-slot.

20. A data transmission apparatus, applicable to a network device, **characterized in that** the apparatus comprises:

a third transmitting unit configured to transmit downlink control information (DCI) used for scheduling physical downlink shared channel(s) (PDSCHs) to a terminal equipment, the DCI comprising a first information field used for indicating time-domain resources of at least two (M) first PDSCHs; and
a fourth transmitting unit configured to transmit at least one (N) second PDSCH to the terminal equipment.

**100**

**101**

**103**

**102**

# Fig.1

**201**

The terminal equipment receives downlink control information (DCI) used for scheduling physical downlink shared channel(s) (PDSCHs), the DCI including a first information field used for indicating time domain resources of at least two (M) first PDSCHs

**202**

the terminal equipment receives at least one (N) second PDSCH

# Fig.2

| First PDSCH | First PDSCH | First PDSCH | First PDSCH |

0 1 2 3 4 5 6 7 8 9 10 11 12 13 | 0 1 2 3 4 5 6 7 8 9 10 11 12 13 | 0 1 2 3 4 5 6 7 8 9 10 11 12 13 | 0 1 2 3 4 5 6 7 8 9 10 11 12 13

A slot

# Fig.3A

Fig.3B

Fig.3C

Fig.4A

Fig.4B

Fig.5A

Fig.5B

Fig.5C

Fig.5D

Fig.5E

Fig.5F

Fig.5G

Fig.6A

Fig.6B

Fig.7A

Fig.7B

Fig.7C

## Fig.7D

## Fig.7E

## Fig.7F

801

the network device transmits downlink control information (DCI) used for scheduling physical downlink shared channel(s) (PDSCHs) to a terminal equipment, the DCI including a first information field used for indicating time-domain resources of at least two (M) first PDSCHs

802

the network device transmits at least one (N) second PDSCH to the terminal equipment

**Fig.8**

900

data reception apparatus

901

a first receiving unit

902

a second receiving unit

**Fig.9**

EP 4 231 743 A1

**1000**

data transmission apparatus

**1001**

a third transmitting unit

**1002**

a fourth transmitting unit

# Fig.10

**1100**

**1120**      **1110**    network device    **1150**

memory

**1130**

program

processor

**1140**

transceiver

# Fig.11

1200

terminal
equipment

1210

1230

1240 — input unit

Communication module
(transmitter/receiver)

Processor

Memory

Buffer

1220 — Application/funct
ion

Data

Program

display — 1250

Power supply — 1260

**Fig.12**

## INTERNATIONAL SEARCH REPORT

| International application No. |
| --- |
| **PCT/CN2020/121332** |

### A.   CLASSIFICATION OF SUBJECT MATTER

H04W 72/04(2009.01)i

According to International Patent Classification (IPC) or to both national classification and IPC

### B.   FIELDS SEARCHED

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 下行控制信息, 物理下行共享信道, 多个, 第二, 反馈, dci, pdsch, multi+, two, second, feedback, harq

### C.   DOCUMENTS CONSIDERED TO BE RELEVANT

| Category* | Citation of document, with indication, where appropriate, of the relevant passages | Relevant to claim No. |
| --- | --- | --- |
| X | CN 109392111 A (TELECOMMUNICATIONS SCIENCE AND TECHNOLOGY RESEARCH INSTITUTE CO., LTD.) 26 February 2019 (2019-02-26) description paragraphs [0138]-[0229] | 1-20 |
| A | OPPO. "Summary #1 of Multi-TRP/Panel Transmission" *3GPP TSG RAN WG1 #100 R1-2000865*, 06 March 2020 (2020-03-06), entire document | 1-20 |
| A | CN 102625456 A (ZTE CORPORATION) 01 August 2012 (2012-08-01) entire document | 1-20 |
| A | CN 111277388 A (VIVO COMMUNICATION TECHNOLOGY CO., LTD.) 12 June 2020 (2020-06-12) entire document | 1-20 |
| A | US 2019215705 A1 (AT & T INTELLECTUAL PROPERTY I, L.P.) 11 July 2019 (2019-07-11) entire document | 1-20 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 July 2021** | **15 July 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

| International application No. |
| --- |
| **PCT/CN2020/121332** |

| Patent document cited in search report | | | Publication date (day/month/year) | Patent family member(s) | | | Publication date (day/month/year) |
| --- | --- | --- | --- | --- | --- | --- | --- |
| CN | 109392111 | A | 26 February 2019 | None | | | |
| CN | 102625456 | A | 01 August 2012 | None | | | |
| CN | 111277388 | A | 12 June 2020 | None | | | |
| US | 2019215705 | A1 | 11 July 2019 | US | 2020229005 | A1 | 16 July 2020 |
| | | | | US | 2018324764 | A1 | 08 November 2018 |

Form PCT/ISA/210 (patent family annex) (January 2015)